# DEMANDE DE BREVET EUROPEEN

(11) **EP 1 604 861 A1**
(43) Date de publication de la demande: **14.12.2005**
(21) Numéro de dépôt: 05291188.0
(22) Date de dépôt: 02.06.2005
(51) Int. Cl.: B60N 2/02

(54) **Dispositif de commande de fonctions dans un ensemble d'éléments réglables et ensemble d'éléments réglables comportant un tel dispositif**

(30) Priorité: 08.06.2004 FR 0406198
(71) Demandeur: Peugeot Citroen Automobiles S.A., 78140 Vélizy Villacoublay (FR)
(72) Inventeur: Deranlot, Christophe, 77100 Nanteuil Les Meaux (FR)
(74) Mandataire: Lanceplaine, Jean-Claude

(57) **Abrégé**

L'invention concerne un dispositif de commande de fonctions dans un ensemble d'éléments réglables (5 à 10), du type comprenant un moteur électrique (15) muni d'un arbre d'entraînement en rotation d'au moins un pignon de sortie associé à un sélecteur d'actionnement (20) des éléments réglables. Le sélecteur d'actionnement (20) comporte, pour chaque élément réglable, une roue dentée engrenant avec le pignon de sortie et déplaçable parallèlement à l'arbre du moteur entre une position de repos et une position active reliée par des organes de liaison (30) avec l'élément réglable correspondant.

L'invention s'applique par exemple aux sièges de véhicules.

## Description

La présente invention concerne un dispositif de commande de fonctions dans un ensemble d'éléments réglables, comme par exemple des éléments réglables d'un siège.

L'invention concerne également un ensemble d'éléments réglables et un siège par exemple de véhicule, équipé d'au moins un tel dispositif de commande de fonctions.

Dans de nombreuses applications et notamment dans le domaine des véhicules, on trouve des ensembles qui comportent plusieurs éléments réglables indépendamment ou simultanément.

C'est le cas par exemple des sièges, des commandes de volets de climatiseur, des commandes de rétroviseurs ou encore des commandes dans différentes positions de la colonne de direction. En effet, les sièges de véhicule comportent de plus en plus une multitude d'éléments réglables en position, comme par exemple les réglages longitudinal et en hauteur de l'assise, le réglage de l'inclinaison de cette assise et du dossier, le réglage de l'appui dorsal du dossier ainsi que les réglages de l'appui-tête en hauteur et de l'avant vers l'arrière.

Pour assurer ces fonctions, il est connu d'utiliser pour chaque élément réglable, un moteur électrique relié à l'élément réglable correspondant par un câble d'entraînement.

Mais, cette solution, conduit à un ensemble onéreux et encombrant qui est difficile à loger dans un espace réduit. De plus, elle nécessite un nombre important de liaisons électriques et de connections.

On connaît également dans le FR-A-2 660 259, un dispositif de commande motorisée des parties réglables d'un siège de véhicule qui comprend au moins un moteur muni d'un arbre de sortie portant deux vis co-axiales, décalées axialement sur l'arbre de sortie et à pas de vis opposé et des paires de roues engrenant avec les vis et deux à deux entre elles.

Le dispositif comprend aussi un arbre de sortie traversant librement chaque roue et destiné à commander un élément associé par l'une et/ou l'autre de ses extrémités opposées et, sur chaque arbre et en regard de chaque roue, un embrayage indépendant des autres embrayages et adapté pour pouvoir lier en rotation l'arbre choisi à la roue correspondante. Un tel dispositif a notamment pour inconvénient d'être limité quant au nombre de fonctions à piloter.

Mais, les principaux inconvénients de ce système résident dans sa complexité et dans son encombrement qui le rend difficilement logeable dans un espace réduit.

L'invention a pour but de proposer un dispositif de commande de fonctions dans un ensemble d'éléments réglables, comme par exemple des éléments réglables d'un siège, qui évite les inconvénients précédemment mentionnés.

L'invention a donc pour objet un dispositif de commande de fonctions dans un ensemble d'éléments réglables, comme par exemple des éléments réglables d'un siège, du type comprenant un moteur électrique muni d'un arbre d'entraînement en rotation d'au moins un pignon de sortie associé à un sélecteur d'actionnement des éléments réglables, caractérisé en ce que le sélecteur d'actionnement comprend, pour chaque élément réglable, une route dentée engrenant avec le pignon de sortie et déplaçable parallèlement à l'arbre du moteur entre une position de repos et une position active reliée par des organes de liaison avec l'élément réglable correspondant.

Selon d'autres caractéristiques de l'invention :
- chaque roue dentée est déplaçable entre les positions de repos et active par un électro-aimant,
- les organes de liaison comprennent, pour chaque élément réglable, d'une part, une roue disposée dans l'axe de la roue dentée correspondante et reliée à l'élément réglable correspondant par un câble d'entraînement et, d'autre part, des moyens d'accouplement en rotation des deux roues entre elles en position active, et
- les moyens d'accouplement en rotation sont formés par des crabots ménagés sur les faces en regard desdites roues.

L'invention a aussi pour objet un ensemble d'éléments réglables, caractérisé en ce qu'il comprend au moins un dispositif de commande de fonctions tel que précédemment mentionné.

L'invention a également pour objet un siège par exemple de véhicule, caractérisé en ce qu'il comprend au moins un dispositif de commande de fonctions d'éléments réglables tel que précédemment mentionné.

Les caractéristiques et avantages de l'invention apparaîtront au cours de la description qui va suivre, donnée à titre d'exemple et faite en référence aux dessins annexés, sur lesquels :
- la Fig. 1 est une vue schématique en perspective d'une structure d'un siège équipé d'un dispositif de commande, conforme à l'invention,
- la Fig. 2 est une vue schématique en perspective éclatée d'un dispositif de commande, conforme à l'invention,
- la Fig. 3 est une vue schématique en coupe axiale d'un des organes de liaison du dispositif de commande dans la position de repos, et
- la Fig. 4 est une vue schématique en coupe axiale de l'organe de liaison représenté à la Fig. 3 dans la position active.

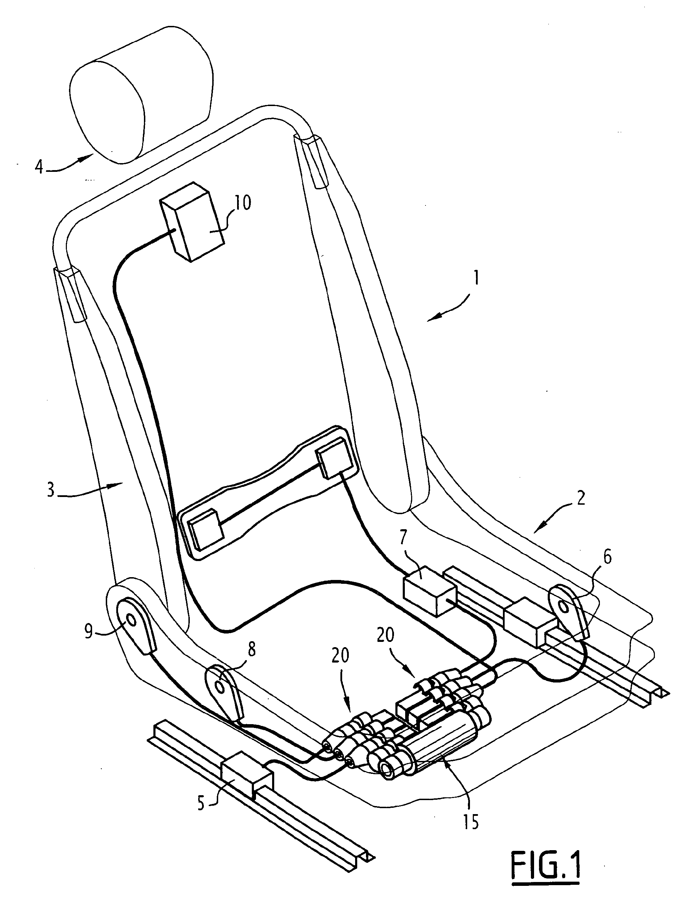

Sur la Fig. 1, on a représenté schématiquement une structure d'un siège notamment d'un véhicule automobile désigné dans son ensemble par la référence 1, la matelassure de ce siège ayant été retirée. La structure du siège 1 est constituée, de manière classique par une assise 2 et par un dossier 3 monté articulé par rapport à ladite assise 2. Le dossier 3 du siège 1 est équipé d'un appui tête 4.

Le siège 1 comporte une multitude d'éléments réglables, comme par exemple un élément 5 de réglage longitudinal en position du siège 1, un élément 6 de réglage en inclinaison de l'assise 2, un élément 7 de réglage de l'appui dorsal du dossier 3, un élément 8 du réglage en hauteur du siège 1, un élément 9 de réglage de l'inclinaison du dossier 3 par rapport à l'assise 2 et un élément 10 de réglage de la l'appui tête 4 en hauteur et de l'avant vers l'arrière.

D'une manière générale, le siège 1 est pourvu d'un dispositif de commande de fonctions des divers éléments réglables 5 à 10 qui comprend au moins un moteur électrique 15 associé à un sélecteur d'actionnement 20 des éléments réglables 5 à 10 pour le réglage en position de l'assise 2, du dossier 3 et de l'appui tête 4.

Dans l'exemple de réalisation représenté à la Fig. 1, le dispositif de commande est constitué par un moteur électrique 15 associé à un sélecteur d'actionnement 20.

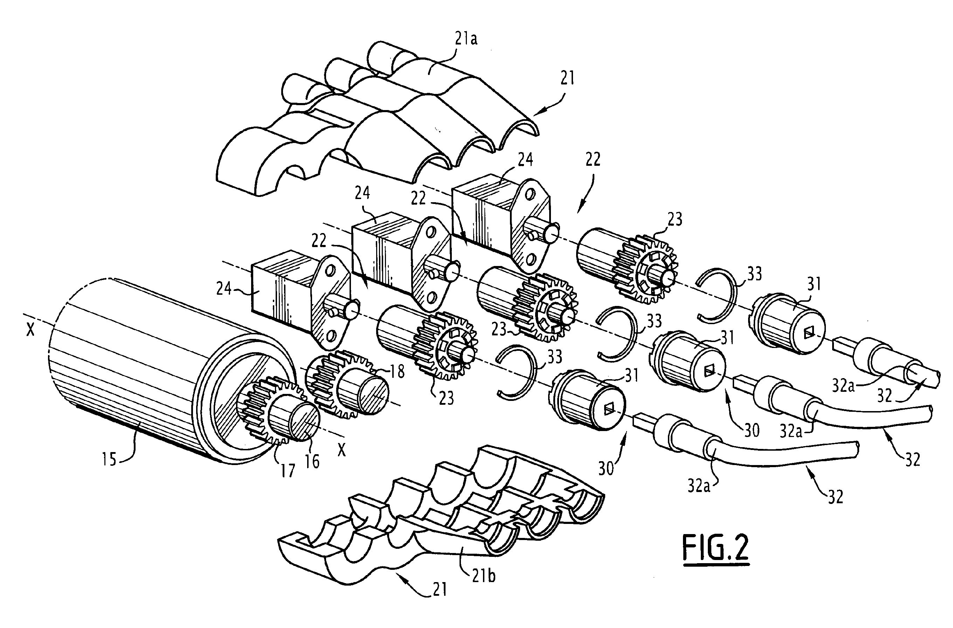

En se reportant maintenant à la Fig. 2, on va décrire un sélecteur de commande 20, l'autre sélecteur de commande 20 étant identique.

Ainsi que représenté sur cette figure, le moteur électrique 15 est muni d'un arbre 16 d'entraînement en rotation d'au moins un pignon 17, de préférence de deux pignons 17 disposés à chacune des extrémités de l'arbre 16, et qui détermine un axe de rotation longitudinal XX.

Le sélecteur d'actionnement 20 comprend un carter 21 formé d'une coquille inférieure 21 a et d'une coquille supérieure 21 b à l'intérieur desquelles est disposé, pour chaque élément réglable du siège 1, un module désigné dans son ensemble par la référence 22. Chaque module de commande 22 associé à un élément réglable du siège 1 comprend une roue dentée 23 qui engrène avec les roues dentées 23 des autres modules 22 de façon à former une série de roues dentées 23 engrenant les unes avec les autres. Le train de roues dentées 23 ainsi réalisé engrène avec le pignon de sortie 17 monté sur l'arbre 16 du moteur électrique 15 par l'intermédiaire d'un pignon 18.

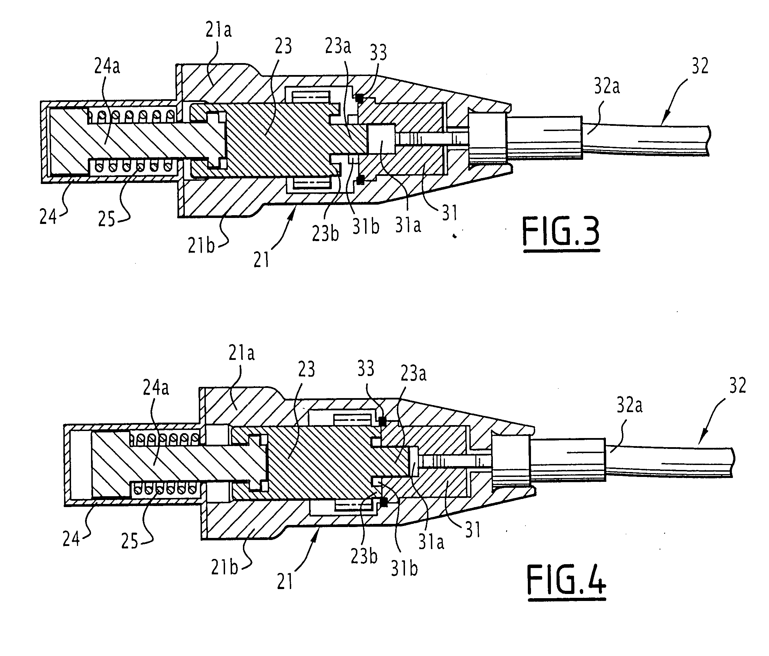

Chaque roue dentée 23 est, comme on le verra ultérieurement, déplaçable parallèlement à l'axe XX de l'arbre 16 du moteur électrique 15, entre une position de repos (Fig. 3) et une position active (Fig. 4) dans laquelle elle est reliée par des organes de liaison désignés par la référence 30 avec l'un des éléments réglables 5 à 10 du siège 1.

En se reportant maintenant aux Figs. 3 et 4, on va décrire un module 22, les autres modules 22 étant identiques.

Ainsi que montré sur ces figures, le module 22 comprend un électro-aimant 24 comportant, de manière classique, une tige de commande 24a déplaçable linéairement et solidaire en translation avec la roue dentée 23 correspondante. Ainsi, l'ensemble constitué par la tige 24a et la roue dentée 23 associée est déplaçable en translation selon une direction s'étendant parallèlement à l'axe XX de l'arbre 16 du moteur électrique 15 entre ladite position active et ladite position de repos. L'ensemble formé par la roue dentée 23 et la tige de commande 24a est rappelé en position de repos par un ressort hélicoïdal 25.

L'organe de liaison 30 de chaque module 22 comprend, d'une part, une roue 31 disposée dans l'axe de la roue dentée 23 correspondante et qui est reliée à l'élément réglable correspondant par un câble 32. A cet effet, l'extrémité 32a du câble 32 associé à la roue 31 est pourvue d'un embout de solidarisation en rotation de cette roue 31 avec ce câble 32 et qui est constitué, par exemple, par un carré d'entraînement.

Par ailleurs, la roue dentée 23 est équipée d'un prolongement 23a qui est destiné à coopérer avec un logement 31 a de forme complémentaire et ménagé dans la roue 31 de façon à assurer un guidage en translation de la roue dentée 23 lors de son déplacement entre la position de repos et la position active.

Les organes de liaison 30 de chaque module 22 comprennent aussi des moyens d'accouplement en rotation de la roue dentée 23 avec la roue 31 correspondante et qui sont formés par des crabots 23b et 31b ménagés respectivement sur les faces en regard desdites roues, respectivement 23 et 31.

Les coquilles 21a et 21b à l'intérieur desquelles sont disposées les électro-aimants 22, les roues dentées 23 ainsi que les roues 31 sont fixés sur le moteur électrique 15 et des joncs d'arrêt 33 (Fig. 2) maintiennent les roues 31 en translation à l'intérieur du carter 21.

Le sélecteur d'actionnement 20 fonctionne de la manière suivante.

Lorsqu'un utilisateur actionne un interrupteur, non représenté, commandant l'un des éléments de réglage 5 à 10 du siège 1, le moteur électrique 15 est mis en fonctionnement et entraîne en rotation le pignon de sortie 17 par l'intermédiaire de l'arbre 16. Ce pignon de sortie 17 entraîne en rotation le pignon 18 ainsi que l'ensemble des roues dentées 23. Simultanément à la commande de l'interrupteur, l'électro-aimant 24 correspondant à l'élément de réglage à actionner sur le siège 1 est mis sous tension ce qui a pour effet de déplacer en translation la roue dentée 23 au moyen de la tige de commande 24a. Cette roue dentée 23 vient donc s'appliquer sur la roue 31 placée en vis à vis et les crabots 23a et 31 b viennent donc en prise si bien que la roue dentée 23 entraîne en rotation, au moyen de ces crabots 23b et 31 b, la roue 31 qui entraîne elle-même en rotation le câble 32 correspondant. Ce câble 32 agit sur l'élément de réglage du siège 1 afin de réaliser le réglage en position de la partie souhaitée du siège.

Lorsque l'utilisateur relâche l'interrupteur, la moteur électrique 15 s'arrête et l'électro-aimant 24 préalablement actionné, ramène la roue dentée 23 correspondante dans sa position de repos initiale sous l'effet du ressort de rappel 25 de façon à désaccoupler les crabots 23b et 31 b.

Le dispositif de commande selon l'invention permet de faire fonctionner indépendamment ou simultanément les modules 22 de façon à actionner un ou plusieurs éléments de réglage.

D'une manière générale, le dispositif de commande n'est pas limité par le nombre d'éléments réglables à piloter et peut comporter autant de module que les éléments de réglage à piloter.

Le dispositif de commande selon l'invention permet donc de réduire le poids, le coût et l'encombrement ainsi que de simplifier les faisceaux électriques pour piloter indépendamment ou simultanément plusieurs éléments réglables d'un même ensemble.

## Revendications

1. Dispositif de commande de fonctions dans un ensemble d'éléments réglables (5 à 10), comme par exemple des éléments réglables d'un siège, du type comprenant un moteur électrique (15) muni d'un arbre (16) d'entraînement en rotation d'au moins un pignon de sortie (17) associé à un sélecteur d'actionnement (20) des éléments réglables (5 à 10), **caractérisé en ce que** le sélecteur d'actionnement (20) comprend, pour chaque élément réglable, une roue dentée (23) engrenant avec le pignon de sortie (17) et déplaçable parallèlement à l'arbre (16) du moteur (15) entre une position de repos et une position active reliée par des organes de liaison (30) à l'élément réglable correspondant.

2. Dispositif selon la revendication 1, **caractérisé en ce que** chaque roue dentée (23) est déplaçable entre les positions de repos et active par un électro-aimant (22).

3. Dispositif selon la revendication 1 ou 2, **caractérisé en ce que** les organes de liaison (30) comprennent, pour chaque élément réglable, d'une part, une roue (31) disposée dans l'axe de la roue dentée (23) correspondante et reliée à l'élément réglable correspondant par un câble (32) et, d'autre part, des moyens (23b, 31b) d'accouplement en rotation des deux roues (23, 31) entre elles en position active.

4. Dispositif selon la revendication 3, **caractérisé en ce que** les moyens d'accouplement en rotation sont formés par des crabots (23b, 31 b) ménagés sur les faces en regard des roues (23, 31).

5. Ensemble d'éléments réglables, **caractérisé en ce qu'**il comprend au moins un dispositif de commande de fonctions selon l'une quelconque des revendications 1 à 4.

6. Siège par exemple de véhicule, **caractérisé en ce qu'**il comprend au moins un dispositif de commande de fonctions d'éléments réglables selon l'une quelconque des revendications 1 à 4.
